Europäisches Patentamt

European Patent Office

Office européen des brevets

(11) Veröffentlichungsnummer : **0 316 001 B1**

## EUROPÄISCHE PATENTSCHRIFT

(45) Veröffentlichungstag der Patentschrift :
**29.01.92 Patentblatt 92/05**

(51) Int. Cl.$^5$ : **B67B 3/00**, B67C 3/00,
B65G 47/84

(21) Anmeldenummer : **88118823.9**

(22) Anmeldetag : **11.11.88**

(54) **Gefässbehandlungsmaschine.**

Verbunden mit 88909757.2/0386075
(europäische
Anmeldenummer/Veröffentlichungsnummer)
durch Entscheidung vom 21.03.91.

(30) Priorität : **11.11.87 DE 8715020 U**

(43) Veröffentlichungstag der Anmeldung :
**17.05.89 Patentblatt 89/20**

(45) Bekanntmachung des Hinweises auf die
Patenterteilung :
**29.01.92 Patentblatt 92/05**

(84) Benannte Vertragsstaaten :
**DE ES FR GB IT**

(56) Entgegenhaltungen :
**FR-A- 735 047**
**GB-A- 1 068 465**
**US-A- 1 957 534**

(73) Patentinhaber : **Kronseder, Hermann**
**Regensburger Strasse 42**
**W-8404 Wörth/Donau (DE)**

(72) Erfinder : **Kronseder, Hermann**
**Regensburger Strasse 42**
**W-8404 Wörth/Donau (DE)**

(74) Vertreter : **Patentanwälte Grünecker,**
**Kinkeldey, Stockmair & Partner**
**Maximilianstrasse 58**
**W-8000 München 22 (DE)**

EP 0 316 001 B1

**Beschreibung**

Die Erfindung bezieht sich auf eine Gefäßbehandlungsmaschine mit einem Maschinengestell und einem darauf antreibbar angeordneten Transportstern mit einem aus mehreren übereinander angeordneten, äußeren Sternringen bestehenden Sternkranz und einer dazu konzentrischen auf Höhe des unteren Sternringes liegenden inneren Flanschplatte, an der der Sternkranz mit einem nach innen weisenden Rand befestigbar ist, wobei die Flanschplatte mit einer Antriebswelle verbunden ist.

Gefäßbehandlungsmaschinen mit Transportsternen werden z.B. in Flaschenabfüllanlagen verwendet. Den Transportsternen kommt die Aufgabe zu, die in einer Einzelreihe ankommenden Flaschen bestimmten Bearbeitungsstationen zuzuführen. Die Transportsterne besitzen hierfür an ihrem Außenumfang sogenannte Sterntaschen, die den jeweiligen Flaschendurchmessern angepaßt sind. Deshalb müssen die Transportsterne ausgetauscht werden, wenn mit der Gefäßgehandlungsmaschine andere Flaschengrößen oder Flaschenformen behandelt werden sollen. Dieses Auswechseln der Transporsterne ist bislang recht aufwendig. Herkömmliche Transportsterne weisen zwei Sternplatten auf, die durch einen Distanzring voneinander beabstandet sind. Die Befestigung des Transportsternes an der Antriebswelle bzw. der Flanschplatte erfolgt über eine Zentralschraube, die von oben in den Transportstern eingesetzt und an der Flanschplatte festgeschraubt wird. Insbesondere bei höheren Transportsternen ist diese Art der Befestigung recht aufwendig, da die Gewindebohrung in der Flanschplatte nicht ohne weiteres getroffen wird. Außerdem sind diese massiv ausgeführten Transportsterne verhältnismäßig schwer, wodurch das Auswechseln erschwert wird.

Zur Verminderung des Gewichts der Transportsterne wurden bereits Versuche gemacht, diese aus Hartschaum herzustellen. Zwar läßt sich hierdurch das Gewicht vermindern, das Befestigen des Transportsternes vereinfacht sich jedoch nicht.

Weiterhin ist aus der DE-OS 3418737 ein Transportstern bekannt, der auf eine zylindrische Säule aufgeschoben wird und von oben mit einem ringartigen Rotationskörper nach unten auf einen Abstützring gedrückt wird. Zum Auswechseln des Transportsternes muß zunächst der Rotationskörper abgenommen werden, wonach dann der Transportstern entlang der Säule abgehoben werden muß. Auch dieses Verfahren ist aufwendig.

Aus der US-PS 2176557 ist ein Transportstern bekannt, der aus einer auf einer Flanschplatte liegenden Sternplatte besteht. Die Flanschplatte weist dreinach oben gerichtete Bolzen auf, die in Bohrungen der Sternplatte eingreifen. Soll die Transportrichtung des Transportsternes umgekehrt werden, kann die Sternplatte nach oben abgenommen und um 180° gedreht weider auf die Bolzen aufgesetzt werden. Eine Befestigung der Sternplatte auf der Flanschplatte ist nicht vorgesehen.

Die US-PS 2827998 zeigt einen Transportstern, der an einem Flansch einer Hohlwelle angeschraubt ist. Zum Abnehmen des Transportsternes muß dieser zunächst von dem Flansch abgeschraubt werden. Die Antriebswelle muß dann auseinandergenommen werden, damit der Transportstern aus der Maschine herausgenommen werden kann. Auch hier ist das Ausbauen des Transportsternes sehr aufwendig.

Aus der GB-PS 660700 ist eine Gefäßbehandlungsmaschine der eingangs genannten Art bekannt, bei der auf einer Antriebswelle eine Flanschplatte aufgeschoben und mit einer zentralen Schraube befestigt ist. An dem äußeren Rand der Flanschplatte ist ein Transportstern mit seinem inneren Rand über mehrere Schrauben angeschraubt. Die Befestigung des Transportsternes zusammen mit der Flanschplatte erfolgt über eine Zentralschraube, die in die Antriebswelle eingeschraubt wird und die über einen Deckel von oben auf den oberen äußeren Sternring des Transportsternes drückt. Auch bei diesem Transportstern besteht das Problem, daß es zum Auswechseln des Transportsternes erforderlich ist, die Zentralschraube von oben, bei durch den Deckel versperrter Sicht, in die Bohrung der Antriebswelle einzuschrauben. Abgesehen von den mehreren, zeitaufwendigen Schraubvorgängen ist es nicht einfach, mit der Schraube die Gewindebohrung in der Antriebswelle zu treffen.

Schließlich ist aus dem deutschen Gebrauchsmuster 1923260 ein Transportstern bekannt, der mit einer im Bereich des oberen Sternringes angeordneten Platte auf die Antriebswelle aufgeschraubt ist. Zwar ist bei diesem Transportstern das Festschrauben bereits einfacher als bei den vorher beschriebenen Transportsternen. Das Aufsetzen des Transportsternes auf die Welle ist jedoch schwieriger, da die Antriebswelle durch eine Ausnehmung in der Platte hindurchgesteckt werden muß, wobei jedoch die Sicht durch den Transportstern selbst verdeckt ist. Auch hier ist das Auswechseln des Transportsternes daher verhältnismäßig zeitaufwendig.

Der Erfindung liegt daher die Aufgabe zugrunde, eine Gefäßbehandlungsmaschine der eingangs genannten Art in der Weise zu verbessern, daß das Auswechseln des Sternkranzes einfacher und schneller vonstatten geht.

Diese Aufgabe wird erfindungsgemäß dadurch gelöst, daß die Flanschplatte fest mit der Antriebswelle verbunden ist und daß am äußeren Rand der Flanschplatte den inneren Rand des Sternkranzes haltende Schnellverschlußriegel angebracht sind.

2

Hieraus resultiert der Vorteil, daß der Sternkranz von oben auf die Flanschplatte aufgesetzt werden kann, ohne daß die Sicht durch einen Deckel od. dgl. beeinträchtigt wird. Zum Befestigen des Sternkranzes sind lediglich die Schnellverschlußriegel zu betätigen. Neben der einfacheren Befestigung ergibt sich der Vorteil, daß der Sternkranz gewichtsmäßig leichter ausgebildet sein kann, da er nur noch aus den übereinander angeordneten Sternringen besteht und eine obere Befestigungsplatte entfällt.

Es ist auf vorteilhafte Weise möglich, den nach innen gerichteten Rand des Sternkranzes an dem unteren Sternring auszubilden. Wenn die Sternringe an einer rohrförmigen Nabe befestigt sind, kann der nach innen gerichtete Rand des Sternkranzes auch an der Nabe selbst ausgebildet sein.

Gemäß einer ersten bevorzugten Ausführungsform sind die Schnellverschlußriegel als den inneren Rand des unteren Sternringes und den äußeren Rand der Flanschplatte durchsetzende Exzenterriegel ausgebildet, bei denen ein Bolzen einen der beiden Ränder von unten hintergreift und ein an dem Bolzen schwenkbar gelagerter Exzenter von oben auf den anderen der beiden Ränder drückt. Hierdurch wird der Sternkranz an dem nach innen gerichteten Rand seines unteren Sternringes mit dem äußeren Rand der Flanschplatte verspannt. Wie bei Exzenterriegeln üblich, bedarf es hierzu anders als bei Schraubverbindungen nur sehr kurzer Betätigungswege.

Eine Positionierung des Sternkranzes auf der Flanschplatte wird in vorteilhafter Weise dadurch erleichtert, daß am inneren Rand des Sternkranzes auf dessen Unterseite eine umlaufende Zentrierausnehmung ausgebildet ist, in die der äußere Rand der Flanschplatte eingreift.

Eine einfache Drehmomentübertragung von der Flanschplatte auf den Sternkranz wird erreicht, wenn die Flanschplatte an ihrem äußeren Rand radiale Mitnehmerausnehmungen aufweist, in die radial nach innen gerichtete Mitnehmernasen des Sternkranzes eingreifen.

Die Orientierung des Sternkranzes in Drehrichtung des Transportsternes läßt sich eindeutig festlegen, wenn eine Mitnehmernase und eine zugehörige Mitnehmerausnehmung größer oder kleiner als die übrigen Mitnehmernasen und Mitnehmerausnehmungen sind. Der Sternkranz kann dann nur in einer bestimmten Drehstellung an der Flanschplatte befestigt werden.

In vorteilhafter Weise bestehen die Sternringe aus einem zäh-elastischen Kunststoff. Hier kommt beispielsweise ein Polyurethan-Hartschaum in Frage, der neben seiner elastischen Eigenschaften auch eine ausreichende Festigkeit aufweist. Die Sternringe und damit der Sternkranz werden gewichtsmäßig leichter, so daß das Auswechseln der Sternkränze noch einfacher vonstatten geht.

Es ist günstig, wenn in die Sternringe jeweils ein metallischer Versteifungsring eingebettet ist.

Gemäß einer besonders bevorzugten Ausführungsform sind die Schnellverschlußriegel als Schwenkriegel ausgebildet, deren äußere Enden in Öffnungsstellung radial innerhalb des äußeren Randes der Flanschplatte liegen und in Schließstellung den inneren Rand des Sternkranzes übergreifen. Durch einfaches Verschwenken dieser Schwenkriegel kann daher erreicht werden, daß der Sternkranz in Schließstellung nicht mehr von der Flanschplatte abgenommen werden kann. In Verbindung mit den Mitnehmernasen und -ausnehmungen wird somit eine formschlüssige Befestigung des Sternkranzes auf der Flanschplatte erreicht.

Wenn die Schwenkriegel so ausgebildet sind, daß deren äußere Enden in eine Zwischenstellung radial gegen den unteren, elastisch nachgiebigen Sternring drücken, wird eine Art Kniehebelverschluß erreicht, indem die Schwenkriegel in den beiden Endstellungen, d.h. in der Öffnungsstellung und in der Schließstellung gegen ein unbeabsichtigtes Verschwenken gesichert sind.

Eine besonders einfache und vor allen Dingen gleichzeitige Betätigung der einzelnen Schwenkriegel ergibt sich, wenn die einzelnen Schwenkriegel nach Art eines Kurbeltriebs mit ihrem inneren Ende schwenkbar an einer konzentrisch auf der Flanschplatte drehbar gelagerten Drehscheibe angelenkt und jeweils zwischen ihrem inneren und ihrem äußeren Ende in einer Gleitführung gelagert sind. Durch Verdrehen der Drehscheibe um einen bestimmten Winkelbetrag wird das Verschwenken und damit das radiale Verschieben der einzelnen Schwenkriegel bewirkt. Da alle Schwenkriegel an einer gemeinsamen Drehscheibe angelenkt sind, kann mit einem einzigen Handgriff der Sternkranz auf der Flanschplatte verriegelt werden.

Um den Drehwinkel festzulegen, ist es günstig, daß radial neben der Drehscheibe mindestens ein, der Verdrehwinkel der Drehscheibe begrenzende Anschlag auf der Flanschplatte angebracht ist.

Es wird besonders bevorzugt, wenn die Anschläge als mindestens zwei einander gegenüberliegende, in die Flanschplatte eingeschraubte und die Drehscheibe von oben übergreifende Kopfschrauben ausgebildet sind. Diese Kopfschrauben bewirken, daß die Drehscheibe auf der Flanschplatte gehalten wird und übernehmen gleichzeitig die Anschlagsfunktion, indem die Schwenkriegel nahe ihren in neren Enden an den Kopfschrauben anstoßen und zwar mit der Vorderkante in Schließstellung und mit der Hinterkante in Öffnungsstellung.

Die Gleitführung für die Schwenkriegel läßt sich besonders einfach als sich in Längsrichtung erstreckendes Langloch ausbilden, welches von einem in die Flanschplatte eingesetzten Führungsbolzen durchsetzt ist. Eine solche Gleitführung ermöglicht neben einer Längsführung auch eine Schwenkbewegung des Schwenkriegels.

Wenn auf der Oberseite der Drehschraube eine Handhabe drehfest angebracht ist, lassen sich die Schwenkriegel besonders einfach von der Öffnungsstellung in die Schließstellung bewegen.

Obwohl bereits zwei Schnellverschlußriegel ausreichen würden, sind vorzugsweise vier Schnellverschlußriegel in Umfangsrichtung der Flanschplatte gleich verteilt angeordnet.

Um beim Auswechseln der Sternkränze etwaige Glasscherben nicht beseitigen zu müssen, sind in der Flanschplatte Durchbrüche zum Durchfallen von Glasscherben ausgebildet.

In bevorzugter Ausgestaltung erstrecken sich die Durchbrüche jeweils etwa zwischen zwei benachbarten Schwenkriegeln und vom äußeren Rand der Flanschplatte bis zur Drehscheibe.

Im folgenden wird ein bevorzugtes Ausführungsbeispiel der Erfindung anhand einer Zeichnung näher erläutert. Es zeigen :

Fig. 1    eine Draufsicht von schräg oben auf ein erstes Ausführungsbeispiel eines erfindungsgemäßen Transportsternes einer Gefäßbehandlungsmaschine,

Fig. 2    eine Schnittansicht durch den Transportstern aus Fig. 1 entlang der Linie II-II,

Fig. 3    eine Draufsicht auf eine Flanschplatte mit Schnellverschlußriegeln des Transportsternes aus Fig. 1, in Öffnungsstellung,

Fig. 4    die Flanschplatte aus Fig. 3 mit den Schwenkriegeln in einer Zwischenstellung,

Fig. 5    die Flanschplatte aus Fig. 3 mit den Schwenkriegeln in Schließstellung,

Fig. 6    in einer Schnittansicht ähnlich wie Fig. 2 den Randbereich zwischen Flanschplatte und Sternkranz mit einer zweiten Variante eines Schnellverschlußriegels, und

Fig. 7    eine Draufsicht auf den Schnellverschlußriegel aus Fig. 6.

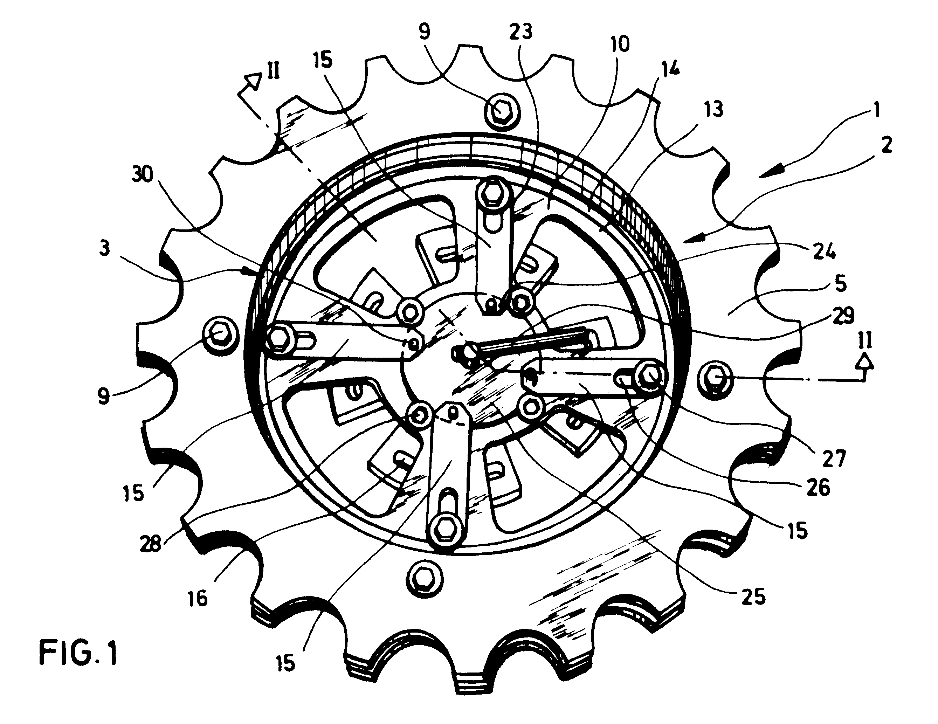

Figur 1 zeigt einen Ausschnitt einer Gefäßbehandlungsmaschine 1 mit einem nicht dargestellten Maschinengestell und einem darauf antriebbar angeordneten Transportstern 2 zur Einzelförderung von Flaschen oder ähnlichen Gefäßen. Der Transportstern 2 weist bei dem hier dargestellten Ausführungsbeispiel einen Sternkranz 3 auf, der aus zwei übereinander angeordneten und durch einen Distanzring 4 voneinander beabstandeten Sternringen 5 und 6 besteht. Die Sternringe 5 und 6 weisen an ihrem Außenumfang Sterntaschen 7 auf, die dem Außenumfang der zu transportierenden Flaschen oder Dosen angepaßt sind. Die beiden Sternringe 5 und 6 bestehen aus einem zäh-elastischen Kunststoff, wie z.B. einem Polyurethan-Hartschaum. In die Sternringe 5 und 6 ist jeweils ein metallischer Verstärkungsring 8 eingebettet. Die beiden Sternringe 5 und 6 sind mittels Spannschrauben 9, die auch den Distanzring 4 durchsetzen, zu dem Sternkranz 3 verschraubt.

Auf Höhe des unteren Sternringes 6 weist der Transportstern 2 eine konzentrisch zu dem Sternkranz 3 angeordnete innere Flanschplatte 10 auf, die über einen Flansch 11 fest mit der Antriebswelle 12 des Transportsternes 2 verbunden ist.

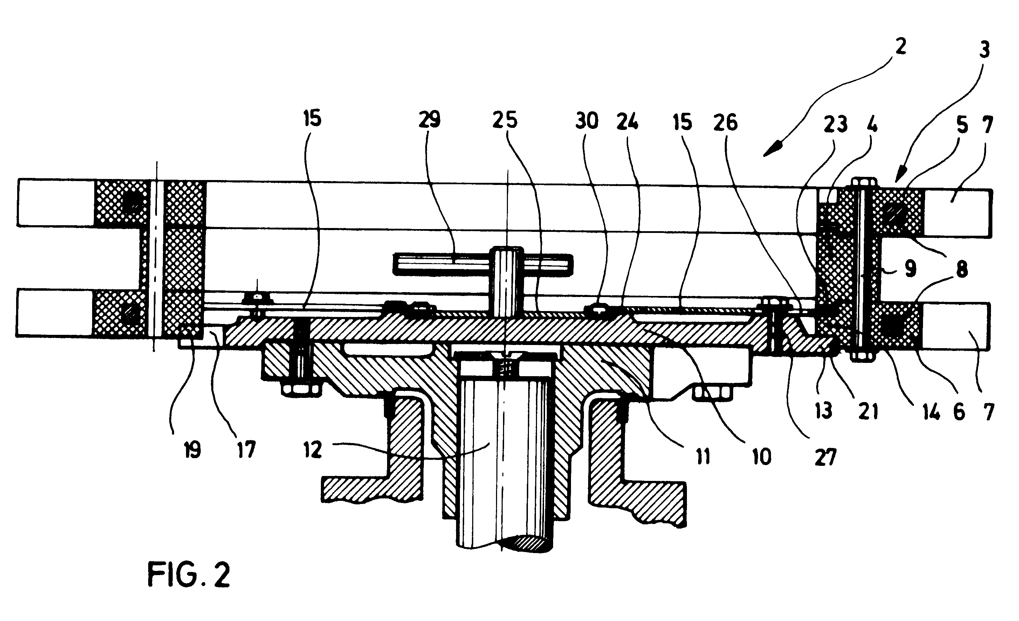

Wie besonders gut aus Fig. 2 erkennbar ist, weist die Flanschplatte 10 einem nach außen abgestuften äußeren Rand 13 auf, auf dem der Sternkranz 3 mit einem radial nach innen gerichteten Rand 14 des unteren Sternringes 6 aufliegt. Die Abmessungen des äußeren Randes 13 und des inneren Randes 14 sind derart gewählt, daß beide Ränder eine Zentrierung des Sternkranzes 3 auf der Flanschplatte 10 bewirken.

Der Sternkranz 3 ist mittels am äußeren Rand 13 der Flanschplatte 10 angeordneter Schnellverschlußriegel 15 befestigt, die in Schließstellung den inneren Rand 14 des unteren Sternringes 5 des Sternkranzes 3 halten. Die genauere Ausgestaltung der Schnellverschlußriegel 15 wird später noch näher erläutert.

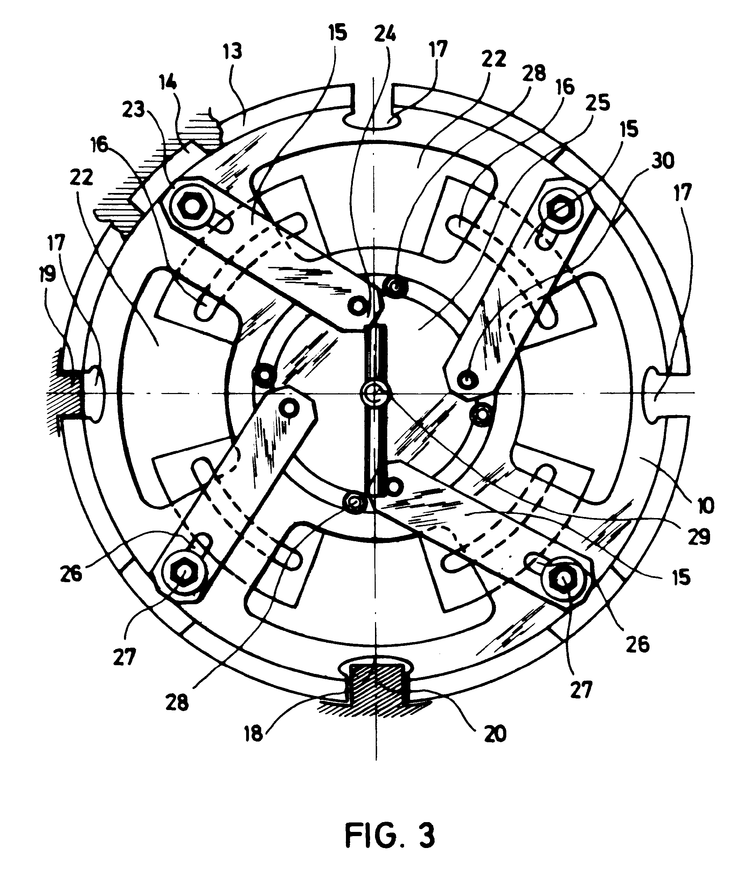

Wie besonders gut aus den Fig. 3 bis 5 hervorgeht, weist der Flansch 11 in Umfangsrichtung orientierte Langlöcher 16 auf, durch die hindurch sich die Befestigungsschrauben für die Flanschplatte 10 erstrecken. Durch diese Anordnung ist es möglich, die Flanschplatte 10 gegenüber dem Flansch 11 zu verdrehen, um eine vorbestimmte Winkellage festzulegen.

Die Flanschplatte 10 weist an ihrem äußeren Rand 13 radiale Mitnehmerausenehmungen 17 und 18 auf, in die radial nach innen gerichtete Mitnehmernasen 19 und 20 des inneren Randes 14 des unteren Sternringes 6 eingreifen. Diese Mitnehmernasen und -ausnehmungen dienen in erster Linie zur Drehmomentübertragung zwischen der Flanschplatte 10 und dem Sternkranz 3. Da aber die Mitnehmerausnehmung 18 und die zugehörige Mitnehmernase 20 größer als die übrigen Mitnehmerausnehmungen 17 bzw. Mitnehmernasen 19 ausgebildet sind, wird durch diese Art der Drehmomentübertragung zugleich eine bestimmte Winkelzuordnung zwischen dem Sternkranz 3 und der Flanschplatte 10 festgelegt.

Bei dem hier gezeigten Ausführungsbeispiel wird die Zentrierung zwischen dem unteren Sternring 5 und der Flanschplatte durch eine ringnutförmige Ausnehmung 21 auf der Unterseite des inneren Randes 14 des unteren Sternringes 6 bewirkt.

Wie besonders gut aus den Fig. 1, 3, 4 und 5 erkennbar ist, weist die Flanschplatte Dadurchbrüche 22 für die Entsorgung von Scherben auf. Das heißt, etwa in das Innere des Sternkranzes 3 gelangende Scherben können durch die Durchbrüche 22 nach unten austreten, ohne den Arbeitsablauf der Gefäßbehandlungsma-

EP 0 316 001 B1

schine zu beeinträchtigen.

Im folgenden werden die Schnellverschlußriegel 15 der ersten Ausführungsform näher erläutert.

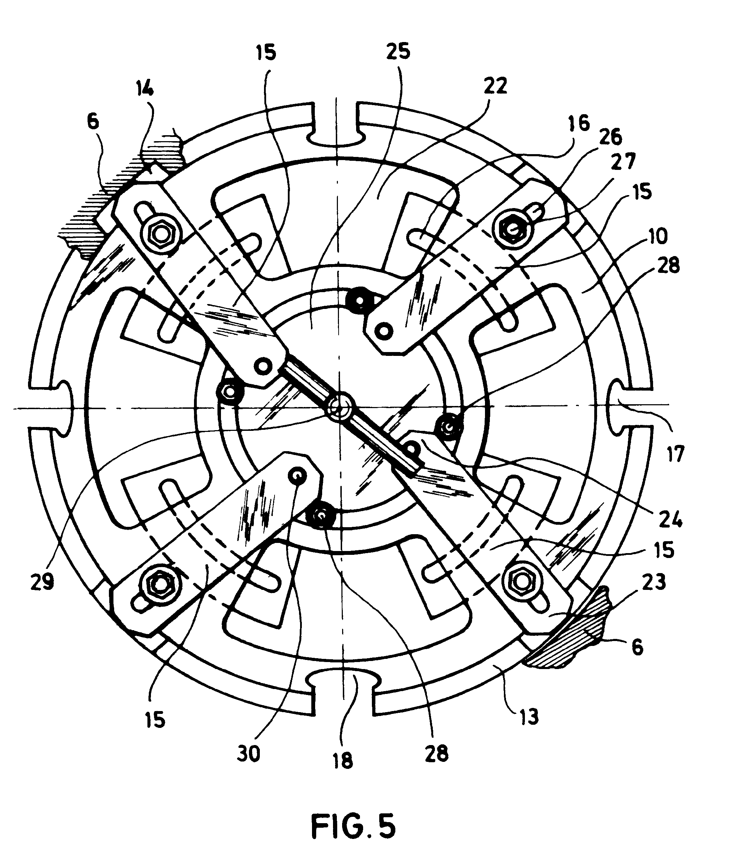

Bei den Schnellverschlußriegeln 15 handelt es sich bei dem hier gezeigten Ausführungsbeispiel um Schwenkriegel, deren äußere Enden 23 in der in Fig. 3 gezeigten Öffnungsstellung radial innerhalb des äußeren Randes 13 der Flanschplatte 10 liegen und in der in den Fig. 5 und 1 gezeigten Schließstellung den inneren Rand 14 des unteren Sternringes 6 von oben übergreifen. Insgesamt sind vier solcher Schwenkriegel 15 vorgesehen, die sich im wesentlichen radial von der Mitte der Flanschplatte 10 zu derem äußeren Rand erstrecken.

Mit ihrem inneren Ende 24 sind die einzelnen Schwenkriegel 15 an Schwenkzapfen 30 einer konzentrisch auf der Flanschplatte 10 drehbar gelagerten Drehscheibe 25 nach Art eines Kurbeltriebes schwenkbar angelenkt. Zwischen ihrem äußeren Ende 23 und ihrem inneren Ende 24 sind die Schwenkriegel 15 in einer Gleitführung gelagert. Diese Gleitführung besteht aus einem sich in Längsrichtung der Schwenkriegel 15 erstreckenden Langloch 26 und einem das Langloch 26 durchsetzenden und in der Flanschplatte 10 eingesetzten Führungsbolzen 27.

Unmittelbar radial neben der Drehscheibe 25 sind Kopfschrauben 28 in die Flanschplatte 10 eingeschraubt. Diese Kopfschrauben halten zum einen die Drehscheibe 25 auf der Flanschplatte 10 und verhindern ein ungewolltes Abnehmen derselben, zum anderen wirken die Kopfschrauben 28 als Anschläge für die Schwenkriegel 15 in deren Öffnungsstellung (vgl. Fig. 3) und deren Schließstellung (vgl. Fig. 5). Für die Anschlagsfunktion würde eine Kopfschraube 28 ausreichen, da sie in der Öffnungsstellung mit der Vorderkante und in der Schließstellung mit der Hinterkante eines benachbarten Schwenkriegels 15 in Berührung kommt.

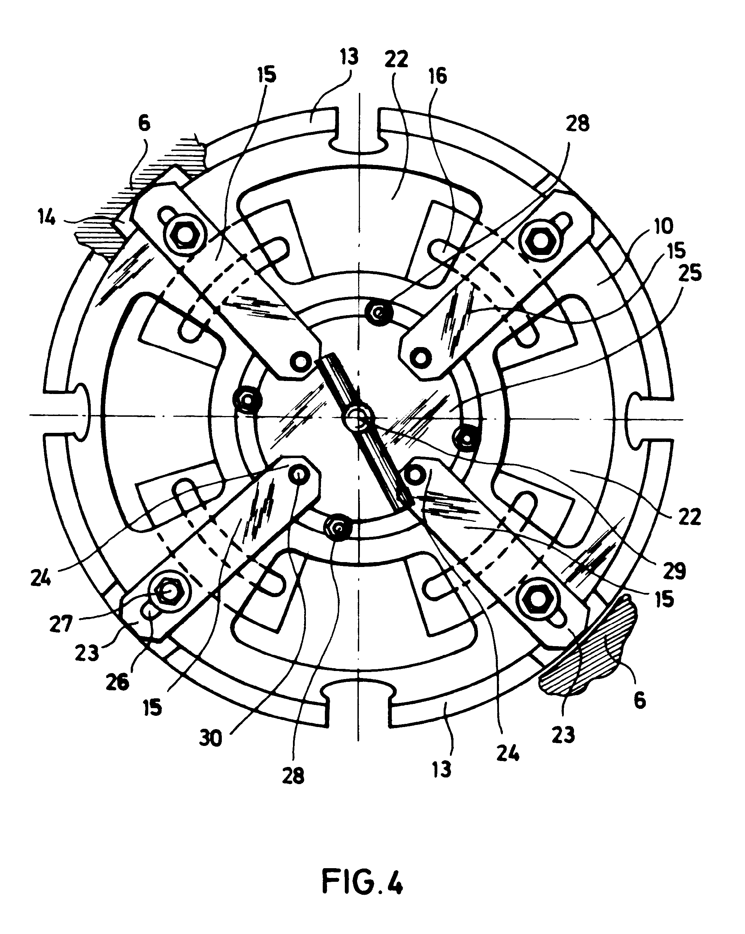

Die Anordnung der Kopfschrauben 28 ist so gewählt, daß die Schwenkriegel 15 sowohl in Öffnungsstellung (vgl. Fig. 3) als auch in Schließstellung (vgl. Fig. 5) nicht genau radial nach außen zeigen, sondern auf den Weg von der Öffnungsstellung in die Schließstellung die Radialenrichtung durchwandern. Diese Zwischenstellung ist in Fig. 4 dargestellt. In dieser Zwischenstellung liegen die äußeren Ende 23 der Schwenkriegel 15 radial am weitesten entfernt von dem Mittelpunkt der Flanschplatte 10. Die äußeren Enden 23 drücken in dieser Zwischenstellung den aus zäh-elastischen Kunststoff bestehenden unteren Sternring 6 radial leicht nach außen, so daß in der Zwischenstellung ein Totpunkt überwunden werden muß. Auf diese Art und Weise wird mit den Schwenkriegeln eine Art bistabiler Kniehebelverschluß erreicht, indem sich die Schwenkriegel 15 nicht selbsttätig aus ihrer Schließstellung (vgl. Fig. 5) lösen können.

Zur einfacheren Betätigung der Schwenkriegel 15 ist auf der Drehscheibe eine Handhabe 29 drehfest angebracht.

Im folgenden wird die Funktions- und Wirkungsweise des ersten Ausführungsbeispieles näher erläutert.

Soll der Sternkranz 3 gegen einen anderen Sternkranz ersetzt werden, da auf der Gefäßehandlungsmaschine beispielsweise größere Gefäße bearbeitet werden sollen, wird der Sternkranz 3 zunächst entriegelt. Ausgehend von der in Fig. 5 dargestellten Schließstellung wird daher die Handhabe 29 im Uhrzeigersinn gedreht. Die Schwenkriegel 15 passieren dabei die Zwischenstellung (vgl. Fig. 4) und drücken gegen den unteren Sternring 6, weshalb beim Drehen der Handhabe 29 ein gewisser Widerstand zu spüren ist. Nach Überwindung dieses Widerstandes läßt sich die Drehscheibe 25 verhältnismäßig leicht soweit drehen, bis die Schwenkriegel 15 an den Kopfschrauben 18 anstoßen. Die Schwenkriegel befinden sich nun in Öffnungsstellung (vgl. Fig. 3). In dieser Stellung kann der Sternkranz 3 nach oben abgenommen und entfernt werden.

Um einen neuen Sternkranz 3 einzubauen, wird dieser zunächst von oben auf die Flanschplatte 10 aufgesetzt und zwar so, daß die Mitnehmernasen 19 und 20 sich mit den jeweiligen Mitnehmerausnehmungen 17 und 18 in der Flanschplatte 10 decken. Durch leichtes Hin- und Her- schieben rutscht der äußere Rand 13 der Flanschplatte 10 in die ringnutförmige Ausnehmung 21 auf der Unterseite des unteren Sternringes 6 hinein. Das Verriegeln des Sternkranzes 3 geschieht in umgekehrter Reihenfolge, wie das Entriegeln, d.h. die Handhabe 29 wird nun entgegen dem Uhrzeigersinn gedreht, bis nach Überwindung des Totpunktes in der Zwischenstellung (vgl. Fig. 4) die Schwenkreigel an der anderen Seite der Kopfschrauben 28 anliegen und sich in Schließstellung befinden. Die äußeren Enden 23 greifen nun von oben über den inneren Ring 14 des unteren Sternringes 6. Der Sternkranz ist in dieser Lage aufgrund der unterschiedlichen Größen der Mitnehmernasen 19 und 20 in Drehrichtung des transportsternes 2 eindeutig fixiert. Die eigentliche Befestigung gegen Abnehmer erfolgt durch die Schwenkriegel 15.

Da bei dem hier gezeigten Ausführungsbeispiel die Oberseite des nach innen gerichteten Randes des unteren Sternringes 6 umlaufend ausgebildet ist, ist es auch möglich, daß jeweils nur im Bereich der äußeren Enden 23 der Schwenkriegel 15 Taschen ausgebildet sind, in die die äußeren Enden 23 der Schwenkriegel 15 eingreifen können.

Wenn die Drehwinkelstellung des Sternkranzes korrigiert werden soll, so ist dies auf einfache Weise dadurch möglich daß mit Hilfe der Langlöcher 16 in dem Flansch 11 die Flanschplatte 10 gegenüber dem Flansch 11 verdreht wird.

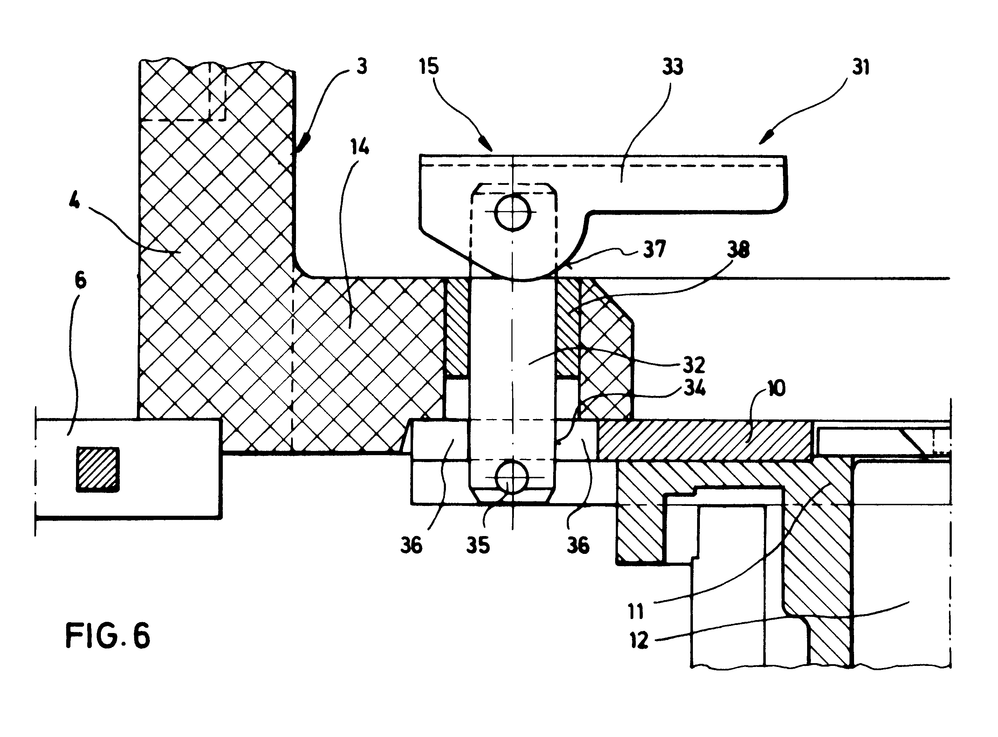

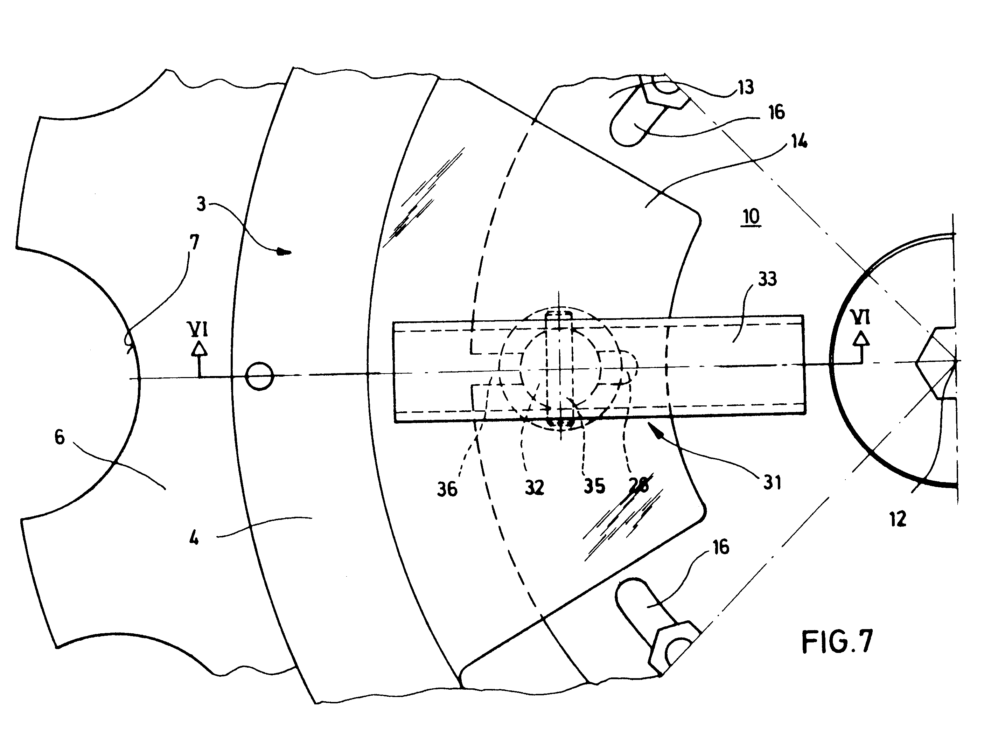

Im folgenden wird anhand der Fig. 6 und 7 ein weiteres Ausführungsbeispiel der Erfindung näher erläutert.

5

Der prinzipielle Aufbau des in den Fig. 6 und 7 nur teilweise dargestellten Transportsternes 2 entspricht dem des oben beschreibenen Ausführungsbeispiels. Für gleiche und ähnliche Bauteile werden daher identische Bezugszeichen verwendet. Im folgenden werden nur die Unterschiede und Besonderheiten des zweiten Ausführungsbeispiels erläutert.

Die Schnellverschlußriegel 15 sind am nach innen gerichteten Rand 14 den Sternkranzes 3 angebracht. Es handelt sich um Exzenterverschlüsse 31 mit einem in dem Rand 14 drehbar und verschiebbar geführten Spannbolzen 32, an dessem oberen Ende ein Kipphebel 33 schwenkbar gelagert ist.

Der Spannbolzen 32 durchsetzt eine Bohrung 34 in der Flanschplatte 10 und weist an seinem unteren Ende einen sich quer zu seiner Längsachse erstreckenden Anschlagstift 35 auf. In der Flanschplatte 10 sind angrenzend an die Bohrung 34 Schlitze 36 ausgebildet, durch die der Anschlagstift 35 zusammen mit dem Spannbolzen 32 von oben durch die Flanschplatte 10 hindurchgesteckt werden kann. Hierzu ist der Spannbolzen 32 gegenüber der in Fig. 6 gezeigten Darstellung um 90° zu verdrehen.

Der Kipphebel 33 weist auf seiner Unterseite einen Exzenter 37 auf, der von oben auf die Oberseite des nach innen gerichteten Randes 14 des Sternkranzes 3 drückt, wenn der Kipphebel sich in der in Fig. 6 gezeigten Spannstellung befindet. In dieser Stellung erstreckt sich der Anschlagstift 35 quer zu den Schlitzen 36 und stützt sich auf der Unterseite der Flanschplatte 10 ab. Aus Fig. 6 ist gut erkennbar, daß der Sternkranz 3 eine rohrförmige Nabe 4 aufweist und daß der innere Rand 14 an der Nabe 4 ausgebildet ist.

In Fig. 7 ist eine Draufsicht auf den Exzenterverschluß 31 dargestellt. Aus dieser Ansicht ist die Lage des Anschlagstiftes 35 quer zu den Schlitzen 36 gut zu erkennen.

Weiterhin ist aus der Draufsicht gut zu erkennen, daß der nach innen gerichtete Rand 14 des Sternkranzes 3 nicht umlaufend ausgebildet sein muß. Es reicht vielmehr aus, wenn jeweils tortenstückartige Randsegmente ausgebildet sind, in denen die Exzenterverschlüsse 31 eingesetzt sind.

Zu erwähnen bleibt noch, daß die Führung des Spannbolzens 32 in dem nach innen gerichteten Rand 14 mittels einer Führungsbuchse 38 erfolgt, die z.B. bei der Herstellung des nach innen gerichteten Randes 14 des Sternkranzes 3 mit eingegossen sein kann. Die Führungsbuchse 38 verhindert zugleich, daß der Exzenterverschluß 31 vollständig herausgenommen werden kann. Der Abstand der Unterkante der Führungsbuchse 38 bis zur Unterkante des inneren Randes 14 entspricht mindestens dem Durchmesser des Anschlagstiftes 35.

Im folgenden wird die Funktions- und Wirkungsweise des Transportsternes 2 gemäß dem zweiten Ausführungsbeispiel näher erläutert.

Ausgehend von der in den Fig. 6 und 7 dargestellten Befestigungslage des Sternkranzes 3 wird das Auswechseln des Sternkranzes 3 beschrieben. Hierzu werden zunächst die Kipphebel 33 der Exzenterverschlüsse 31, von denen vorzugsweise um den Umfang des Sternkranzes 3 insgesamt vier angeordnet sind, nach oben geschwenkt, so daß sich der Exzenter 37 von der Oberseite des nach innen gerichteten Randes 14 löst. Der Spannbolzen 32 liegt nun mit Spiel zwischen der Flanschplatte 10 und dem nach innen gerichteten Rand 14 des Sternkranzes 3. Dieses Spiel erlaubt es, daß der Spannbolzen gegenüber der in Fig. 7 gezeigten Stellung um 90° gedreht werden kann. Die Schlitze 36 fluchten dann mit dem Anschlagstift 35. Beim Anheben der Spannbolzen 32 könnte daher der Anschlagstift 35 die Schlitze 36 passieren. Wenn sich alle Exzenterverschlüsse 31 in dieser Stellung befinden, kann der Sternkranz 3 abgenommen werden.

Der zum Austausch vorgesehene neue Sternkranz 3 wird von oben aufgesetzt und leicht hin und her verschoben, so daß sich der äußere Rand der Flanschplatte 10 in die ringnutförmige Ausnehmung 21 auf der Unterseite des nach innen gerichteten Randes 14 des Sternkranzes 3 einsetzt. In dieser Stellung ist der Sternkranz 3 bereits zentriert.

Die Unterseite des nach innen gerichteten Randes 14 liegt bereits auf der Oberseite der Tragplatte 10 auf, da zwischen der Unterkante der Führungshülse 38 und der Oberkante der Tragplatte 10 ausreichend Platz ist, daß das untere Ende des Spannbolzens 32 mit seinem Anschlagstift 35 aufgenommen werden kann. Durch leichtes Verdrehen des Sternkranzes 3 gegenüber der Flanschplatte 10 kommen die Spannbolzen 32 mit der zugehörigen Bohrung 34 in Deckung, so daß die Spannbolzen 32 mit ihrem unteren Ende in die Bohrungen eingreifen. Die Exzenterverschlüsse 31 werden nun nach unten gedrückt oder fallen bereits aufgrund ihrer Schwerkraft nach unten, bis die zugehörigen Anschlagstifte 35 durch die Schlitze 36 hindurchgetreten sind. Der Kipphebel 33 eines Exzenterverschlusses 31 zeigt in dieser Stellung schräg nach oben. Die Exzenterverschlüsse 31 werden nun so gedreht, daß die Kipphebel im wesentlichen radial nach innen zeigen. Dadurch liegt der zugehörige Anschlagstift 35 quer zu den Schlitzen 36. Danach werden die Kipphebel der jeweiligen Exzenterverschlüsse 31 nach unten gedrückt, so daß der Exzenter 37 sich auf der Oberseite des nach innen weisenden Randes 14 des Sternkranzes 3 abstützt und der Exzenterverschluß 31 den nach innen gerichteten Rand 14 und die Flanschplatte 10 gegeneinander verspannt. Der neue Sternkranz 3 ist befestigt.

Bei beiden Ausführungsbeispielen fällt auf, daß ein einfacher Austausch der Sternkränze auch dann möglich ist, wenn der Sternkranz eine gewisse Höhe aufweist. Die Verbindung des Sternkranzes 3 an der Flanschplatte erfolgt mit sehr wenigen Handgriffen.

Zur Verschönerung ist es auch möglich, von oben einen Deckel lose auf den Sternkranz 3 aufzusetzen.

Auch wenn sich die Vorteile dieser Erfindung in erster Linie bei Sternkränzen bemerkbar machen, die eine gewisse Höhe aufweisen, läßt sich die erfindungsgemäße Art der Befestigung auch bei Transportsternen anwenden, bei denen der Sternkranz nur einen Sternring aufweist.


**Patentansprüche**

1. Gefäßbehandlungsmaschine mit einem Maschinengestell und einem darauf antreibbar angeordneten Transportstern mit einem aus mehreren übereinander angeordneten äußeren Sternringen bestehenden Sternkranz und einer dazu konzentrisch auf Höhe des unteren Sternringes liegenden, inneren Flanschplatte, an der der Sternkranz mit einem nach innen weisenden Rand befestigbar ist, wobei die Flanschplatte mit einer Antriebswelle verbunden ist, **dadurch gekennzeichnet**, daß die Flanschplatte (10) fest mit der Antriebswelle (12) verbunden ist und daß am äußeren Rand (13) der Flanschplatte (10) den inneren Rand (14) des Sternkranzes (3) haltende Schnellverschlußriegel (15) angebracht sind.

2. Gefäßbehandlungsmaschine nach Anspruch 1, **dadurch gekennzeichnet**, daß der nach innen gerichtete Rand (14) des Sternkranzes (3) an dem unteren Sternring (6) ausgebildet ist.

3. Gefäßbehandlungsmachine nach Anspruch 1 oder 2, **dadurch gekennzeichnet**, daß die Sternringe (5, 6) an einer rohrförmigen Nabe (4) befestigt sind und daß der innere Rand (14) des Sternkranzes (3) an der Nabe (4) ausgebildet ist.

4. Gefäßbehandlungsmaschine nach einem der Ansprüche 1 bis 3, **dadurch gekennzeichnet,** daß die Schnellverschlußriegel (15) als den inneren Rand (14) des Sternkranzes (3) und den äußeren Rand (13) der Flanschplatte (10) durchsetzende Exzenterriegel (31) ausgebildet sind, bei denen ein Bolzen (32) einen (13) der beiden Ränder von unten hintergreift und ein an dem Bolzen (32) schwenkbar gelagerter Exzenter (37) von oben auf den anderen (14) der beiden Ränder drückt.

5. Gefäßbehandlungsmaschine nach einem der Ansprüche 1 bis 4, **dadurch gekennzeichnet,** daß am inneren Rand (14) des Sternkranzes (3) auf dessen Unterseite eine umlaufende Zentrieraufnehmung (21) ausgebildet ist, in die der äußere Rand (13) der Flanschplatte (10) eingreift.

6. Gefäßbehandlungsmachine nach einem der Ansprüche 1 bis 5, **dadurch gekennzeichnet,** daß die Flanschplatte (10) an ihrem äußeren Rand (13) radiale Mitnehmerausnehmungen (17, 18) aufweist, in die radial nach innen gerichtete Mitnehmernasen (19, 20) des Sternkranzes (3) eingreifen.

7. Gefäßbehandlungsmaschine nach einem der Ansprüche 1 bis 6, **dadurch gekennzeichnet,** daß eine der Mitnehmernasen (20) und eine zugehörige Mitnehmerausnehmung (18) größer oder kleiner als die übrigen Mitnehmernasen (19) und Mitnehmerausnehmungen (17) ausgebildet sind.

8. Gefäßbehandlungsmaschine nach einem der Ansprüche 1 bis 7, **dadurch gekennzeichnet,** daß die Sternringe (5, 6) aus einem zäh-elastischen Kunststoff bestehen.

9. Gefäßbehandlungsmaschine nach einem der Ansprüche 1 bis 8, **dadurch gekennzeichnet,** daß in die Sternringe (5, 6) jeweils ein metallischer Versteifungsring (8) eingebettet ist.

10. Gefäßbehandlungsmaschine nach einem der Ansprüche 1 bis 9, **dadurch gekennzeichnet,** daß die Schnellverschlußriegel (15) als Schwenkriegel ausgebildet sind, deren äußere Enden (23) in Öffnungsstellung radial innerhalb des äußeren Randes (13) der Flanschplatte (10) liegen und in Schließstellung den inneren Rand (14) des Sternkranzes (3) übergreifen.

11. Gefäßbehandlungsmaschine nach einem der Ansprüche 1 bis 10, **dadurch gekennzeichnet,** daß die äußeren Enden (23) der Schwenkriegel (15) in einer Zwischenstellung radial gegen den unteren, elastisch nachgiebigen Sternring (6) drücken.

12. Gefäßbehandlungsmaschine nach einem der Ansprüche 1 bis 11, **dadurch gekennzeichnet,** daß die einzelnen Schwenkriegel (15) nach Art eines Kurbeltriebs mit ihrem inneren Ende (24) schwenkbar an einer konzentrisch auf der Flanschplatte (10) drehbar gelagerten Drehscheibe (25) angelenkt und jeweils zwischen ihrem inneren (24) und ihrem äußeren Ende (23) in einer Gleitführung (26, 27) gelagert sind.

13. Gefäßbehandlungsmaschine nach einem der Ansprüche 1 bis 12, **dadurch gekennzeichnet,** daß radial neben der Drehscheibe (25) mindestens ein den Verdrehwinkel der Drehscheibe (25) begrenzender Anschlag (28) auf der Flanschplatte (10) angebracht ist.

14. Gefäßbehandlungsmaschine nach einem der Ansprüche 1 bis 13, **dadurch gekennzeichnet,** daß die Anschläge (28) als mindestens zwei, einander gegenüberliegende, in die Flanschplatte eingeschraubte und die Drehscheibe (25) von oben übergreifende Kopfschrauben ausgebildet sind.

15. Gefäßbehandlungsmaschine nach einem der Ansprüche 1 bis 14, **dadurch gekennzeichnet,** daß als Gleitführung für die Schwenkriegel ein sich in diesen in Längsrichtung erstreckendes Langloch (26) ausgebildet

EP 0 316 001 B1

ist, welches von einem in die Flanschplatte (10) eingesetzten Führungsbolzen (27) durchsetzt ist.

16. Gefäßbehandlungsmaschine nach einem der Ansprüche 1 bis 15, **dadurch gekennzeichnet,** daß auf der Oberseite der Drehscheibe (25) eine Handhabe (29) drehfest angebracht ist.

17. Gefäßbehandlungsmaschine nach einem der Ansprüche 1 bis 16, **dadurch gekennzeichnet,** daß vier Schnellverschlußriegel (15), in Umfangsrichtung der Flanschplatte (10) gleich verteilt, angeordnet sind.

18. Gefäßbehandlungsmaschine nach einem der Ansprüche 1 bis 17, **dadurch gekennzeichnet,** daß in der Flanschplatte (10) Durchbrüche (22) zum Durchfallen von Glasscherben ausgebildet sind.

19. Gefäßbehandlungsmaschine nach einem der Ansprüche 1 bis 18, **dadurch gekennzeichnet,** daß sich die Durchbrüche (22) jeweils etwa zwischen zwei benachbarten Schwenkriegeln (15) und vom äußeren Rand (13) der Flanschplatte bis zur Drehscheibe (25) erstrecken.


**Claims**

1. Container handling machine with a machine frame and, mounted drivably thereon, a conveyor star with a star rim consisting of several outer star rings arranged one above the other and an inner flange plate which is located concentrically thereto at the level of the lower star ring and to which the star rim can be attached by an inwardly pointing edge, wherein the flange plate is connected to a drive shaft, characterised in that the flange plate (10) is rigidly connected to the drive shaft (12) and that on the outer edge (13) of the flange plate (10) are mounted quick-acting latches (15) which hold the inner edge (14) of the star rim (3).

2. Container handling machine according to claim 1, characterised in that the inwardly directed edge (14) of the star rim (3) is constructed on the lower star ring (6).

3. Container handling machine according to claim 1 or 2, characterised in that the star rings (5, 6) are attached to a tubular hub (4) and that the inner edge (14) of the star rim (3) is constructed on the hub (4).

4. Container handling machine according to any of claims 1 to 3, characterised in that the quick-acting latches (15) are constructed as cam latches (31) which pass through the inner edge (14) of the star rim (3) and the outer edge (13) of the flange plate (10) and in which a bolt (32) engages behind one (13) of the two edges from below and a cam (37) mounted pivotably on the bolt (32) presses from above on the other one (14) of the two edges.

5. Container handling machine according to any of claims 1 to 4, characterised in that at the inner edge (14) of the star rim (3) on the lower side thereof is formed a peripheral centring recess (21) in which the outer edge (13) of the flange plate (10) engages.

6. Container handling machine according to any of claims 1 to 5, characterised in that the flange plate (10) comprises at its outer edge (13) radial driver recesses (17, 18) in which radially inwardly directed driver projections (19, 20) of the star rim (3) engage.

7. Container handling machine according to any of claims 1 to 6, characterised in that one of the driver projections (20) and one associated driver recess (18) are larger or smaller than the other driver projections (19) and driver recesses (17).

8. Container handling machine according to any of claims 1 to 7, characterised in that the star rings (5, 6) are made of a viscoelastic plastic.

9. Container handling machine according to any of claims 1 to 8, characterised in that a metal reinforcing ring (8) is embedded in each star ring (5, 6).

10. Container handling machine according to any of claims 1 to 9, characterised in that the quick-acting latches (15) are constructed as pivot latches, the outer ends (23) of which in the open position are located radially inside the outer edge (13) of the flange plate (10) and in the closed position overlap the inner edge (14) of the star rim (3).

11. Container handling machine according to any of claims 1 to 10, characterised in that the outer ends (23) of the pivot latches (15) in an intermediate position press radially against the lower, elastically yielding star ring (6).

12. Container handling machine according to any of claims 1 to 11, characterised in that the individual pivot latches (15) after the fashion of a crank mechanism are pivotably coupled by their inner end (24) to a rotary disc (25) mounted rotatably and concentrically on the flange plate (10), and are each mounted in a slideway (26, 27) between their inner and outer ends (24, 23).

13. Container handling machine according to any of claims 1 to 12, characterised in that radially adjacent to the rotary disc (25), at least one stop (28) defining the angle of rotation of the rotary disc (25) is mounted on the flange plate (10).

14. Container handling machine according to any of claims 1 to 13, characterised in that the stops (28) are constructed as two or more mutually opposed screws with heads screwed into the flange plate and overlapping

8

EP 0 316 001 B1

the rotary disc (25) from above.

15. Container handling machine according to any of claims 1 to 14, characterised in that as a slideway for the pivot latches there is constructed a slot (26) extending in the longitudinal direction therein, through which passes a guide pin (27) inserted in the flange plate (10).

16. Container handling machine according to any of claims 1 to 15, characterised in that a handle (29) is mounted non-rotatably on the upper side of the rotary disc (25).

17. Container handling machine according to any of claims 1 to 16, characterised in that four quick-acting latches (15) are equally distributed in the circumferential direction of the flange plate (10).

18. Container handling machine according to any of claims 1 to 17, characterised in that apertures (22) are formed in the flange plate (10) for glass fragments to fall through.

19. Container handling machine according to any of claims 1 to 18, characterised in that the apertures (22) extend in each case approximately between two adjacent pivot latches (15) and from the outer edge (13) of the flange plate to the rotary disc (25).

**Revendications**

1. Dispositif de manutention de récipients, comprenant un bâti de machine sur lequel est montée une étoile transporteuse pouvant être entraînée et comportant une couronne en étoile constituée de plusieurs bagues en étoile extérieures superposées et d'une plaque à bride intérieure disposée concentriquement par rapport à la couronne en étoile, au niveau de la bague en étoile inférieure, sur laquelle la couronne en étoile peut être fixée au moyen d'un bord dirigé vers l'intérieur, la plaque à bride étant couplée avec un arbre moteur, **caractérisé en ce** que la plaque à bride (10) est solidaire de l'arbre moteur (12) et que sur le bord extérieur (13) de la plaque à bride (10) sont montés des verrous à enclenchement rapide (15) qui maintiennent le bord intérieur (14) de l'étoile transporteuse (3).

2. Dispositif de manutention de récipients selon la revendication 1, caractérisé en ce que le bord (14) de la couronne en étoile (3) dirigé vers l'intérieur est conformé sur la bague en étoile inférieure (6).

3. Dispositif de manutention de récipients selon l'une des revendications 1 ou 2, caractérisé en ce que les bagues en étoiles (5, 6) sont fixées sur un moyeu tubulaire (4) et que le bord intérieur (14) de la couronne en étoile (3) est conformé sur ledit moyeu (4).

4. Dispositif de manutention de récipients selon l'une des revendications 1 à 3, caractérisé en ce que les verrous à enclenchement rapide (15) sont réalisés sous la forme de verrous à excentrique (31) qui traversent le bord intérieur (14) de la couronne en étoile (3) et le bord extérieur (13) de la plaque à bride (10) et pour lesquels un boulon (32) passe par le bas derrière l'un (13) des deux bords alors qu'un excentrique (37) monté de manière pivotante sur ledit boulon (32) appuie par le haut sur l'autre (14) des deux bords.

5. Dispositif de manutention de récipients selon l'une des revendications 1 à 4, caractérisé en ce que sur le bord intérieur (14) de la couronne en étoile (3), à la face inférieure de celle-ci, est conformé un évidement de centrage circulaire (21) dans lequel s'engage le bord extérieur (13) de la plaque à bride (10).

6. Dispositif de manutention de récipients selon l'une des revendications 1 à 5, caractérisé en ce que la plaque à bride (10) présente à son bord extérieur (13) des évidements d'entraînement radiaux (17, 18) dans lesquels s'engagent des tocs d'entraînement (19, 20) de la couronne en étoile (3) dirigés vers l'intérieur.

7. Dispositif de manutention de récipients selon l'une des revendications 1 à 6, caractérisé en ce que l'un des tocs d'entraînement (20) et un évidement d'entraînement associé (18) sont plus grands ou plus petits que les autres tocs d'entraînement (19) et évidements d'entraînement (17).

8. Dispositif de manutention de récipients selon l'une des revendications 1 à 7, caractérisé en ce que les bagues en étoiles (5, 6) sont constituées d'une matière plastique tenace et élastique.

9. Dispositif de manutention de récipients selon l'une des revendications 1 à 8, caractérisé en ce que dans les bagues en étoile (5, 6) est respectivement encastrée une bague de renfort métallique (8).

10. Dispositif de manutention de récipients selon l'une des revendications 1 à 9, caractérisé en ce que les verrous à enclenchement rapide (15) sont conformés en verrous pivotants dont les extrémités extérieures (23) se situent, dans la position d'ouverture, radialement à l'intérieur du bord extérieur (13) de la plaque à bride (10) et recouvrent, dans la position de fermeture, le bord intérieur (14) de la couronne en étoile (3).

11. Dispositif de manutention de récipients selon l'une des revendications 1 à 10, caractérisé en ce que, dans une position intermédiaire, les extrémités extérieures (23) des verrous pivotants (15) poussent contre la bague en étoile inférieure (6) élastique.

12. Dispositif de manutention de récipients selon l'une des revendications 1 à 11, caractérisé en ce que les différents verrous pivotants (15) sont articulés avec leur extrémité intérieure (24), à la manière d'une commande à manivelle, sur un disque tournant (25) monté concentriquement et de façon tournante sur la pla-

9

que à bride (10) et montés respectivement entre leurs extrémités intérieure (24) et extérieure (23) dans une coulisse (26, 27).

13. Dispositif de manutention de récipients selon l'une des revendications 1 à 12, caractérisé en ce que, radialement à côté du disque tournant (25), au moins une butée (28) limitant l'angle de rotation du disque tournant (25) est disposée sur la plaque à bride (10).

14. Dispositif de manutention de récipients selon l'une des revendications 1 à 13, caractérisé en ce que les butées (28) sont réalisées sous la forme d'au moins deux vis à tête diamétralement opposées, vissées dans la plaque à bride et recouvrant le disque tournant (25) par le haut.

15. Dispositif de manutention de récipients selon l'une des revendications 1 à 14, caractérisé en ce que la coulisse pour les verrous pivotants est réalisée sous la forme d'un trou oblong (16) qui s'étend longitudinalement dans lesdits verrous et est traversé par une broche-guide (27) insérée dans la plaque à bride (10).

16. Dispositif de manutention de récipients selon l'une des revendications 1 à 15, caractérisé en ce que sur la face supérieure du disque tournant (25) un élément de prise (29) est monté de manière rigide en rotation.

17. Dispositif de manutention de récipients selon l'une des revendications 1 à 16, caractérisé en ce que quatre verrous à enclenchement rapide (15) sont répartis à des intervalles égaux dans le sens circonférentiel de la plaque à bride (10).

18. Dispositif de manutention de récipients selon l'une des revendications 1 à 17, caractérisé en ce que dans la plaque à bride (10) sont ménagés des ajours (22) pour l'évacuation des débris de verre.

19. Dispositif de manutention de récipients selon l'une des revendications 1 à 18, caractérisé en ce que les ajours (22) s'étendent à chaque fois sensiblement entre deux verrous pivotants (15) voisins et du bord extérieur (13) de la plaque à bride jusqu'au disque tournant (25).

FIG.1

EP 0 316 001 B1

FIG. 2

EP 0 316 001 B1

FIG. 3

FIG.4

FIG.5

FIG. 6

EP 0 316 001 B1

FIG.7

EP 0 316 001 B1